# EUROPEAN PATENT APPLICATION

(11) **EP 1 089 216 A1**
(43) Date of publication of application: **04.04.2001**
(21) Application number: 00308636.0
(22) Date of filing: 29.09.2000
(51) Int. Cl.: G06K 11/18

(54) **Computer mouse accessory**

(30) Priority: 29.09.1999 GB 9922901; 14.07.2000 GB 0017286
(71) Applicant: Smith, David Edwin, Kettering, Northamptonshire NN14 3DP (GB)
(72) Inventor: Smith, David Edwin, Kettering, Northamptonshire NN14 3DP (GB)
(74) Representative: Evens, Paul Jonathan

(57) **Abstract**

A computer mouse accessory (10) comprises a compliant cover (12) configured to be a snug fit over a computer mouse (14). The compliant cover (12) comprises a textile fabric substrate (A) with a fur-like finish (B) and padding 24, concentrated in a region which in use will provide cushioning for the palm region of a user's hand. The compliant cover (12) improves the visual and tactile appeal of a computer mouse, without interfering with operation of pressure-sensitive switches associated therewith.

## Description

The present invention relates to a novel computer mouse accessory.

A computer mouse is ergonomically designed so that a user's hand fits snugly around the device. The computer mouse may be considered as having a bottom surface which is in contact with a work surface such as a mouse pad when in use, and an upper surface which includes one or more pressure-sensitive switches for controlling computer operations when operated.

Various computer mouse covers are known from German utility model applications DE 298 19 990, DE 297 00 169, DE 296 17 262 and DE 298 13 256. However, the present applicant believes there is a need for an improved cover.

In accordance with a first aspect of the present invention, there is provided a computer mouse accessory comprising a compliant cover for covering an upper surface of a computer mouse, and means for readily attaching the compliant cover to the computer mouse without interfering with essential functions of the computer mouse, whereby in use pressure-sensitive switching associated with the computer mouse is operable through the compliant cover.

The compliant cover must not interfere with the essential functions of the computer mouse including the control of the cursor on the computer screen. For this reason, the cover may not extend over the bottom surface of the computer mouse. The cover must also have sufficient compliability so as to prevent the accessory from interfering with operation of the pressure-sensitive switches provided in the upper surface of the computer mouse.

The attaching means may be releasable. For example, the attaching mouse may comprise an adhesive which adheres to plastics material whilst being removable, perhaps by peeling away. The attaching means may include two parts, a first part for attaching to the computer mouse, a second part attached or for attaching to the flexible cover, with the first and second parts adhering when pressed together. The first and second parts may include looped and burred regions for adhering in the manner of a Velcro fastening.

The compliant cover may comprise a moisture-absorbent substance. A computer mouse is constructed from plastics material which is invariably hydrophobic and certainly not water-absorbent. Thus, perspiration generated during use by the user may accumulate on the upper surface of the computer mouse, giving rise to user discomfort. The presence of a moisture-absorbent substance in the compliant cover would help to convey any perspiration away from the user's hand operating the computer mouse. Any absorbed moisture may simply be allowed to evaporate when the computer mouse was not in use.

The compliant cover may include padding to provide a degree of through-thickness compressibility. The padding, which may be of resilient foam, may be greatest in a localised region spaced from pressure-sensitive switches associated with the computer mouse and located to cushion the palm (and more particularly the heel) of a user's hand. The greatest depth of padding may be about 10mm when uncompressed by a user's hand, and the padding may compress by up to 50% during normal use. The plastics materials used for computer mouse housings are usually very rigid and thus are inclined to be unforgiving on the user's hand. In contrast, a padded or spongy compliant cover may adopt a more user-friendly shape in the hand of the user. Furthermore, the padding may alter the posture of user's hand relative to the wrist during mouse operation, possible reducing the risk of being afflicted by repetitive strain injury (RSI) or carpal tunnel syndrome.

Tactile qualities of the compliant cover are very important. The compliant cover may include a furry outer layer. The furry outer layer may be stroked by the user which may give rise to a therapeutic effect not unlike stroking a pet cat or dog.

The compliant cover may include protuberances shaped to resemble animal-like features selected from the group consisting of eyes, ears and a nose. The protuberances may be shaped such that the accessory resembles a mammalian mouse.

In accordance with the invention, there may be provided a computer mouse in combination with a computer mouse accessory as hereinbefore defined and described. The computer mouse accessory may be a snug fit around the upper surface of the computer mouse.

Also, in accordance with the invention, there may be provided a computer-mouse-shaped body member in combination with a computer mouse accessory as hereinbefore defined and described. The body member is adapted to support the computer mouse accessory, helping to maintain the desired outline or profile of the latter. The body member may be a snug fit within the compliant cover of the accessory, thereby urging the cover to adopt a stuffed, rather than collapsed or floppy, configuration. In this way, the body member may provide a form of packaging or self-supporting stand for the computer mouse accessory which may be useful, for example, at points of sale. The body member may optimise overall appearance and demonstrate the functionality of the computer mouse accessory to potential users.

The computer-mouse-shaped body member may be resilient (e.g. comprising a resilient foam) or may be somewhat compliant (e.g. beanbag-like), or even a combination of the two. So long as it is not rigid, the body member transforms the computer mouse accessory into a soft toy. The compliant cover of the accessory may be releasably coupled to the body member. For example, a releasable coupling may be provided, possibly in the form of looped and burred regions for adhering in the manner of a Velcro fastening. Such looped and burred regions may be provided to anchor a peripheral edge of the compliant cover to the body member.

In accordance with a second aspect of the present invention, there is provided a therapeutic device comprising a compliant cover for covering the upper surface of a computer mouse, and means for attaching the compliant cover to a computer mouse, wherein the compliant cover is sponge-like, i.e. compressible or absorbent. The sponge-like cover may be furry.

An embodiment of the invention will now be described by way of example with reference to the accompanying drawings in which:-
Figure 1 shows a plan view of an accessory embodying the present invention;
Figure 2 is a side view of the accessory of Figure 1; and
Figure 3 is an exploded schematic view showing the accessory of Figure 1 in combination with a support member.

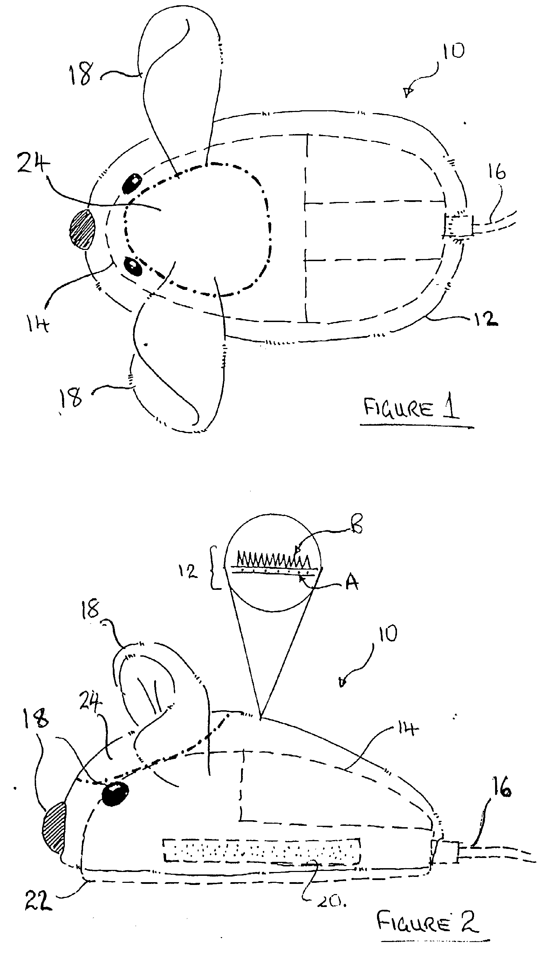

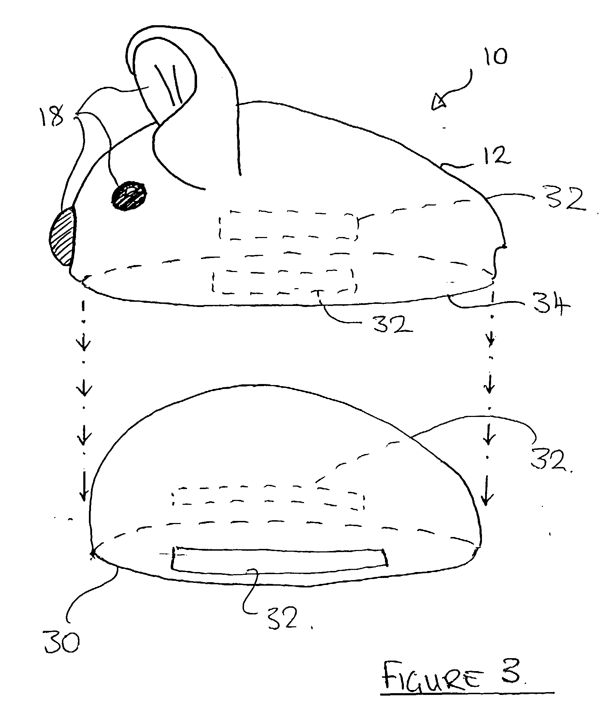

Figures 1 and 2 show a computer mouse accessory (10) comprising a compliant cover (12). The compliant cover (12) is configured to be a snug fit over a computer mouse (14) which is shown in phantom lines together with cabling (16). [If the computer mouse (14) was wireless, an elongate, flexible member may be provided for attaching to the compliant cover (12) in order to give a similar overall appearance].

The compliant cover (12) comprises a textile fabric substrate (A) and a fur-like finish (B) for improved tactile qualities, and for absorbing perspiration from the user's hand. The compliant cover (12) includes protuberances (18) which are shaped and positioned to resemble mammalian mouse features such as a nose, eyes and ears. The textile fabric substrate (A) and fur-like material (B) are shown in more detail in Figure 2 in the enlarged cross-sectional view of the compliant cover (12).

The inside surface of the compliant cover (12) includes double-sided adhesive strips (20) along lateral sides. One side of the adhesive strips is attached to the compliant cover (12). The other side is for attachment to the computer mouse (14) and prior to use is protected by a peelable layer. When fixing into position, the peelable layers are removed and the compliant cover (12) orientated over the computer mouse (14) such that face-like protuberances (18) point towards the user and the computer mouse cabling (16) resembles a tail. The sides of the flexible cover (12) do not project beyond bottom edge (22) of the computer mouse (14).

In use, the compliant cover (12) is comfortable to hold, having a pleasing texture for the user and being able to absorb perspiration from the user's hand. User comfort is increased by padding (24) which comprises resilient foam. The padding (24) is concentrated in a region which in use will provide cushioning for the palm region (and especially the "heel" region associated with the ball of the thumb) of the user's hand.

Figure 3 shows an exploded view of the computer mouse accessory (10) and a computer-mouse-shaped body member (30). When the accessory (10) is not in place on a computer mouse (14) it may be stored with advantage on the body member (30). The body member (30) has a beanbag-like construction, but may include sponge-like padding, and may therefore be compliant or resilient. By storing the accessory (10) in this way, the compliant cover (12) will be maintained in the three-dimensional shape required to cover the upper surface of a computer mouse. Thus, the body member (30) acts as a dummy computer mouse to model the accessory (10). The body member (30) is of a size to be a snug fit within the compliant covering (12). Strips (32) are provided on the outer periphery of the body member (30) and the inner periphery of the accessory (10) - adjacent peripheral edge (34) - so as to be in registration when the compliant covering (12) is in position over the body member (30). Pairs of strips (32) which are opposed when in registration, have looped and burred regions which engage in the manner of a Velcro fastening to anchor the covering (12) to the body member (30). In this way, the computer mouse accessory (10) is transformed into a soft toy.

## Claims

1. A computer mouse accessory comprising a compliant cover for covering an upper surface of a computer mouse, and means for attaching the compliant cover to the computer mouse without interfering with essential functions of the computer mouse, wherein the compliant cover comprises padding to provide a degree of through-thickness compressibility and whereby in use pressure-sensitive switches associated with the computer mouse are operable through the compliant cover.

2. A computer mouse accessory according to claim 1, in which the attaching means is releasable.

3. A computer mouse accessory according to claim 2, in which the attaching means comprises two parts, with a first part for attaching to the computer mouse and with a second part attached to or for attaching to the compliant cover, the first and second parts adhering to each other when pressed into contact.

4. A computer mouse accessory according to any one of claims 1 to 3, in which the compliant cover comprises a moisture-absorbent substance.

5. A computer mouse accessory according to any one of claims 1 to 4, in which the greatest depth of padding is about 10mm when uncompressed by a user's hand.

6. A computer mouse accessory according to claim 5, in which the padding is greatest in a localised region located to cushion the palm of a user's hand.

7. A computer mouse accessory according to any one of claims 1 to 6, in which the compliant cover is provided with a furry outer layer.

8. A computer mouse accessory according to claim 7, in which the compliant cover includes at least one protuberance shaped to resemble an animal-like feature selected from the group consisting of an eye, an ear and a nose.

9. A computer mouse accessory according to claim 8, in which the protuberances resemble a mammalian mouse.

10. A computer mouse accessory according to any one of claims 1 to 9, further comprising a computer-mouse-shaped body member for supporting the compliant cover when not in use, the body member being a snug fit within the compliant cover, with the combination being soft toy-like.

11. A computer mouse in combination with a computer mouse accessory according to any one of claims 1 to 9, the computer mouse accessory being a snug fit around the upper surface of the computer mouse.

12. A therapeutic device for use in combination with a computer mouse, comprising a compliant cover for covering the upper surface of the computer mouse, and means for attaching the compliant cover to the mouse, wherein the compliant cover is sponge-like with a furry outer layer to encourage stroking by a user, whereby pressure-sensitive switching associated with the computer mouse is operable through the compliant cover.
